# EUROPEAN PATENT APPLICATION

(11) **EP 4 579 440 A1**
(43) Date of publication of application: **02.07.2025**
(21) Application number: 23881437.0
(22) Date of filing: 25.08.2023
(51) Int. Cl.: G06F 8/41

(54) **CODE PROCESSING METHOD AND APPARATUS AND RELATED DEVICE**

(30) Priority: 24.10.2022 CN 202211303705; 29.01.2023 CN 202310125318
(71) Applicant: Huawei Technologies Co., Ltd., Shenzhen, Guangdong 518129 (CN)
(72) Inventor: WANG, Long, Shenzhen, Guangdong 518129 (CN); WANG, Zhe, Shenzhen, Guangdong 518129 (CN); YAN, Baicheng, Shenzhen, Guangdong 518129 (CN); SONG, Changcheng, Shenzhen, Guangdong 518129 (CN); LIU, Hongguang, Shenzhen, Guangdong 518129 (CN); WANG, Zheng, Shenzhen, Guangdong 518129 (CN)
(74) Representative: Pfenning, Meinig & Partner mbB
(86) International application number: PCT/CN2023/115079
(87) International publication number: WO 2024/087854

(57) **Abstract**

This application provides a code processing method and apparatus, and a related device. The method includes: A computing device identifies a computing mode of each code segment in source code based on a computing mode template set. For a to-be-identified code segment that is in each code segment and whose computing mode cannot be identified based on the computing mode template set, the computing device identifies the computing mode of the to-be-identified code segment through logical analysis. Then, the computing device extracts mode information of each code segment, where the extracted mode information includes any one or more of a data flow feature, a computing rule feature, a control flow feature, a storage format feature, or a communication operation feature. In the method, without running of code, identification is first performed in a template matching manner with high identification efficiency, so that efficiency of computing mode identification can be improved. For a code segment that cannot be matched with a template, identification is then performed by using a logic analysis method with high identification accuracy, so that a quantity of code segments that are in the source code and whose computing modes can be identified can be increased.

## Description

This application claims priorities to Chinese Patent Application No. 202211303705.1, filed with the China National Intellectual Property Administration on October 24, 2022 and entitled "CODE IDENTIFICATION METHOD AND APPARATUS ORIENTED TO COMPUTING MODE", and to Chinese Patent Application No. 202310125318.1, filed with the China National Intellectual Property Administration on January 29, 2023 and entitled "CODE PROCESSING METHOD AND APPARATUS, AND RELATED DEVICE", both of which are incorporated herein by reference in their entireties.

### TECHNICAL FIELD

This application relates to the field of computer technologies, and in particular, to a code processing method and apparatus, and a related device.

### BACKGROUND

Code optimization refers to equivalent transformation performed on program code. Transformation is performed on the program code without changing a program running result, and a running result of transformed code is the same as a running result of source code existing before the transformation, but the transformed code has higher running efficiency, higher computing system utilization, smaller space occupied during running, or the like. However, based on a current code optimization technology, in a process of running source code, performance hotspots of the source code need to be collected in a sampling manner, and program code needs to be optimized based on the performance hotspots. Usually, a performance hotspot of code is a code segment corresponding to a computing mode. Therefore, identifying the computing mode of the code is a key step for optimizing the code. However, in the foregoing process of running the source code, determining the performance hotspot by using the sampling method causes time overheads of sampling, and for an application running for a long time, time costs of analysis and optimization are further increased. Therefore, how to improve identification efficiency of a computing mode of code is a technical problem to be urgently resolved.

### SUMMARY

This application provides a code processing method and apparatus, and a related device. A computing mode included in source code can be identified without running of the source code, efficiency of identifying the computing mode in the source code is improved, and the source code can be further optimized based on the identified computing mode.

According to a first aspect, this application provides a code processing method. The method includes: A computing device obtains source code, and identifies a computing mode of each code segment in the source code based on a computing mode template set. The computing mode template set includes a series of rules that correspond to each computing mode and that are written based on each computing mode. For a to-be-identified code segment that is in each code segment and whose computing mode cannot be identified based on the computing mode template set, the computing device identifies a computing mode of the to-be-identified code segment through logical analysis. Then, the computing device extracts mode information of each code segment. The extracted mode information includes any one or more of a data flow feature, a computing rule feature, a control flow feature, a storage format feature, or a communication operation feature.

According to the foregoing computing mode identification method, computing modes of a plurality of code segments in the source code can be identified without running of the source code. This avoids time overheads caused by running the source code, and improves identification efficiency of the computing mode of the code. When identifying the computing modes of the plurality of code segments in the source code, the computing device first performs identification in a template matching manner with high identification efficiency, to improve efficiency of computing mode identification. However, for a code segment whose computing mode cannot be identified through template matching, the computing device performs identification by using a logical analysis method with high identification accuracy, to increase a quantity of code segments whose computing modes can be identified. This facilitates subsequent processing of the source code. For example, this can be used to optimize the source code. In the foregoing method, a code segment corresponding to a computing mode that is usually an application hotspot can be identified by using the source code, and the code does not need to be optimized in a compilation process. This can improve code debugging or optimization efficiency. In addition, a larger quantity of code that is in the source code and whose computing mode is identified indicates a larger quantity of code that can be optimized in the source code, and indicates a better effect of optimizing the source code.

In a possible implementation, before the computing device identifies the computing mode of the to-be-identified code segment through logical analysis, the method further includes: The computing device outputs prompt information. The prompt information indicates a user to modify a first to-be-identified code segment, and the first to-be-identified code segment is any one of to-be-identified code segments. The computing device obtains a first to-be-identified code segment modified by the user, and identifies, based on the computing mode template set, a computing mode of the first to-be-identified code segment modified by the user. When the computing mode of the first to-be-identified code segment is not identified based on the computing mode template set, the computing device identifies the computing mode of the first to-be-identified code segment through the logical analysis.

When a computing mode of one code segment is not identified based on the computing mode template set, a possible cause is that the code segment has a small quantity of features that can match a template in the computing mode template set. As a result, the computing device cannot determine the computing mode of the code segment. The computing device can output the prompt information to prompt the user that the code segment cannot be identified in the template matching manner, and the user can modify the code segment, so that the computing device can extract more features of the code segment to perform template matching.

It should be understood that a rule corresponding to each computing mode is a template corresponding to the computing mode, and templates of different computing modes include mode information of the computing mode. When identifying a computing mode of the first code segment based on the computing mode template set, the computing device first extracts mode information of the first code segment, and matches the extracted mode information of the first code segment with templates of various computing modes in the computing mode template set.

In a possible implementation, that the computing device identifies a computing mode of the to-be-identified code segment through logical analysis includes: The computing device generates, for the first to-be-identified code segment in the foregoing to-be-identified code segment, a template that meets a feature of a first computing mode. The first computing mode is a prediction mode of the first to-be-identified code segment. The computing device constructs, for the foregoing template, a solution space for a to-be-determined parameter of the template, and determines a candidate solution of the to-be-determined parameter within a range of the solution space. When the candidate solution can express semantics of the first computing mode, the computing device determines that the first computing mode is the computing mode of the foregoing first to-be-identified code segment.

A code segment whose computing mode cannot be identified through template matching is identified by using the logical analysis method with high identification accuracy. This can increase a quantity of code segments that are in the source code and whose computing modes can be identified. For example, when the source code is optimized based on the computing mode of the code segment, a quantity of code that can be optimized in the source code can be increased.

In a possible implementation, before the computing device identifies the computing mode of the to-be-identified code segment through logical analysis, the method further includes: The computing device determines the prediction mode of the foregoing first to-be-identified code segment based on the computing mode template set.

When a computing mode of each code segment is identified based on the computing mode template set, and when a computing mode of one code segment cannot be determined, the computing mode of the code segment can be predicted, to subsequently identify the computing mode through the logical analysis.

In a possible implementation, after extracting mode information of the first code segment, the method further includes: The computing device generates a mode layer intermediate representation of the first code segment based on the mode information of the first code segment. The mode layer intermediate representation is an intermediate representation designed based on a computing mode. The computing device determines one or more first-type candidate optimization methods that can be used for the first code segment and that are of a computing mode of the first code segment in an optimization method corresponding to a mode layer. The one or more first-type candidate optimization methods are used to optimize the first code segment at the mode layer.

After the computing device identifies the computing mode of each code segment in the source code according to the method for identifying the computing mode of the first code segment, and extracts the mode information of each code segment, the computing device can accurately express mode information and a feature of the computing mode by designing a mode layer intermediate representation corresponding to the code, so that the computing device can determine more optimization opportunities and methods, and further optimize the first code segment. This optimizes the source code more thoroughly, and better improves performance of the optimized code.

In a possible implementation, after the computing device determines the first-type candidate optimization method corresponding to the first code segment at the mode layer, the foregoing method further includes: The computing device generates an element layer intermediate representation of the first code segment based on the mode layer intermediate representation of the first code segment. The element layer intermediate representation is compatible with multi-level intermediate representation (multi-level intermediate representation, MLIR), and supports one or more of a matrix, a scalar, a control flow, and an affine change. The computing device determines one or more second-type candidate optimization methods that can be used for the first code segment and that are of the computing mode of the first code segment in the optimization method corresponding to the mode layer. The one or more second-type candidate optimization methods are used to optimize the first code segment at an element layer.

In a possible implementation, after the computing device determines a second-type candidate optimization method corresponding to the first code segment at the mode layer, the method further includes: The computing device generates a hardware layer intermediate representation of the first code segment based on the element layer intermediate representation of the first code segment. The hardware layer intermediate representation is compatible with a high-performance data structure, computing, memory access, and a communication operation used in an abstract system and hardware. The computing device determines one or more third-type candidate optimization methods that can be used for the first code segment and that are of the computing mode of the first code segment in an optimization method corresponding to a hardware layer. The one or more third-type candidate optimization methods are used to optimize the first code segment at the hardware layer.

After determining the optimization method of the first code segment at the mode layer, the computing device converts the first code segment into the hardware layer intermediate representation. Key information and features of different hardware can be accurately expressed, so that the computing device can determine more optimization opportunities and methods, and further optimize the first code segment. This optimizes the source code more thoroughly, and better improves the performance and portability of the optimized code.

In a possible implementation, after the computing device determines an optimization method that can be used by the first code segment at the mode layer, the element layer, and the hardware layer, the method further includes: The computing device obtains one or more combinatorial optimization methods according to the one or more first-type candidate optimization methods, the one or more second-type candidate optimization methods, and the one or more third-type candidate optimization methods. Each combinatorial optimization method includes one first-type candidate optimization method, one second-type candidate optimization method, and one third-type candidate optimization method. The computing device scores the one or more combinatorial optimization methods, to obtain a score corresponding to each combinatorial optimization method, and determines a combinatorial optimization method having a highest score as a target combinatorial optimization method for optimizing the first code segment.

The first code segment can be optimized in different optimization manners at the mode layer, the element layer, and the hardware layer. A plurality of combinatorial optimization methods can be obtained through combination. The plurality of combinatorial optimization methods are scored, so that a degree of performance improvement of the first code segment after the first code segment is optimized by using different combinatorial optimization methods can be obtained. In this way, a user can select, based on a requirement, a combinatorial optimization method to optimize the first code segment.

In a possible implementation, the scoring the one or more combinatorial optimization methods includes: scoring the combinatorial optimization method according to an optimization policy selected by a user. The optimization policy includes running speed first, computing resource utilization first, or memory utilization first.

A user has different requirements for running of an application. The computing device scores the plurality of combinatorial optimization methods according to the optimization policy of the user, so that a finally obtained combinatorial optimization method can better meet an actual requirement of the user. For example, if the user needs a running speed of the source code to be higher after optimization, when the computing device scores various combinatorial optimization methods, a higher running speed of code after the source code is optimized by using a combinatorial optimization method indicates a higher score of the combinatorial optimization method.

In a possible implementation, after converting the first code segment into the mode layer intermediate representation and determining the first-type candidate optimization method corresponding to the first code segment at the mode layer, the computing device does not need to convert the mode layer intermediate representation into the element layer intermediate representation. The computing device can generate the element layer intermediate representation of the first code segment based on the mode information of the first code segment, and then determine that one or more candidate optimization methods that can be used for the first code segment and that are of the computing mode of the first code segment in the optimization method corresponding to the mode layer. The one or more candidate optimization methods are used to optimize the first code segment.

In a possible implementation, after converting the first code segment into the mode layer intermediate representation and the element layer intermediate representation, and determining candidate optimization methods corresponding to the first code segment at the mode layer and the element layer, the computing device does not need to convert the first code segment into the element layer intermediate representation. The computing device can generate the hardware layer intermediate representation of the first code segment based on the mode information of the first code segment, and then determine the one or more candidate optimization methods that can be used for the first code segment and that are of the computing mode of the first code segment in the optimization method corresponding to the hardware layer. The foregoing one or more candidate optimization methods are used to optimize the first code segment.

In a possible implementation, after the computing device extracts mode information of each code segment, the method further includes: The computing device generates, based on the mode information of each code segment, an intermediate representation corresponding to a target compiler. The computing device inputs the intermediate representation corresponding to the target compiler into the target compiler for compilation, to generate an executable file corresponding to the source code.

According to a second aspect, this application provides a code processing apparatus. The apparatus includes: an analysis module, configured to: obtain source code, and identify a computing mode of each code segment in the source code based on a computing mode template set, where the computing mode template set includes a series of rules that correspond to each computing mode and that are written based on each computing mode, and the analysis module is configured to: for a to-be-identified code segment that is in each code segment and whose computing mode cannot be identified based on the computing mode template set, identify the computing mode of the to-be-identified code segment through logical analysis; and an extraction module, configured to extract mode information of each code segment. The extracted mode information includes any one or more of a data flow feature, a computing rule feature, a control flow feature, a storage format feature, or a communication operation feature.

In a possible implementation, the foregoing analysis module is further configured to: when no computing mode of some code segments is identified by using the computing mode template set, output prompt information, where the prompt information indicates a user to modify a first to-be-identified code segment, and the first to-be-identified code segment is any one of the foregoing to-be-identified code segments; obtain a first to-be-identified code segment modified by the user, and identify, based on the computing mode template set, a computing mode of the first to-be-identified code segment modified by the user; and when the computing mode of the first to-be-identified code segment is not identified based on the computing mode template set, identify the computing mode of the first to-be-identified code segment through the logical analysis.

In a possible implementation, that the analysis module is configured to identify a computing mode of the to-be-identified code segment through logical analysis specifically includes: generating, for the first to-be-identified code segment in the foregoing to-be-identified code segment, a template that meets a feature of a first computing mode, where the first computing mode is a prediction mode of the first to-be-identified code segment; constructing, for the foregoing template, a solution space for a to-be-determined parameter of the template, and determining a candidate solution of the to-be-determined parameter within a range of the solution space; and when the candidate solution can express semantics of the first computing mode, determining that the first computing mode is the computing mode of the foregoing first to-be-identified code segment.

In a possible implementation, before the foregoing analysis module identifies the computing mode of the to-be-identified code segment through logical analysis, the analysis module is further configured to determine the prediction mode of the foregoing first to-be-identified code segment based on a computing mode template set.

In a possible implementation, after the analysis module extracts mode information of a first code segment, the analysis module is further configured to: generate a mode layer intermediate representation of the first code segment based on the mode information of the first code segment, where the mode layer intermediate representation is an intermediate representation designed based on a computing mode; and determine one or more first-type candidate optimization methods that can be used for the first code segment and that are of a computing mode of the first code segment in an optimization method corresponding to a mode layer. The one or more first-type candidate optimization methods are used to optimize the first code segment at the mode layer.

In a possible implementation, after the analysis module determines the first-type candidate optimization method corresponding to the first code segment at the mode layer, the analysis module is further configured to: generate an element layer intermediate representation of the first code segment based on the mode layer intermediate representation of the first code segment, where the element layer intermediate representation is compatible with multi-level intermediate representation (multi-level intermediate representation, MLIR), and supports one or more of a matrix, a scalar, a control flow, and an affine change; and determine one or more second-type candidate optimization methods that can be used for the first code segment and that are of the computing mode of the first code segment in the optimization method corresponding to the mode layer. The one or more second-type candidate optimization methods are used to optimize the first code segment at an element layer.

In a possible implementation, after the analysis module determines the second-type candidate optimization method corresponding to the first code segment at the mode layer, the analysis module is further configured to: generate a hardware layer intermediate representation of the first code segment based on the element layer intermediate representation of the first code segment, where the hardware layer intermediate representation is compatible with a high-performance data structure, computing, memory access, and a communication operation used in an abstract system and hardware; and determine one or more third-type candidate optimization methods that can be used for the first code segment and that are of the computing mode of the first code segment in an optimization method corresponding to a hardware layer. The one or more third-type candidate optimization methods are used to optimize the first code segment at the hardware layer.

In a possible implementation, after the analysis module determines an optimization method that can be used by the first code segment at the mode layer, the element layer, and the hardware layer, the analysis module is further configured to: obtain one or more combinatorial optimization methods according to the one or more first-type candidate optimization methods, the one or more second-type candidate optimization methods, and the one or more third-type candidate optimization methods, where each combinatorial optimization method includes one first-type candidate optimization method, one second-type candidate optimization method, and one third-type candidate optimization method; and score the one or more combinatorial optimization methods, to obtain a score corresponding to each combinatorial optimization method, and determine a combinatorial optimization method having a highest score as a target combinatorial optimization method for optimizing the first code segment.

In a possible implementation, the analysis module is specifically configured to score the combinatorial optimization method according to an optimization policy selected by a user. The optimization policy includes running speed first, computing resource utilization first, or memory utilization first.

In a possible implementation, after converting the first code segment into the mode layer intermediate representation and determining the first-type candidate optimization method corresponding to the first code segment at the mode layer, the analysis module does not need to convert the mode layer intermediate representation into the element layer intermediate representation. The analysis module can generate the element layer intermediate representation of the first code segment based on the mode information of the first code segment, and then determine that one or more candidate optimization methods that can be used for the first code segment and that are of the computing mode of the first code segment in the optimization method corresponding to the mode layer. The one or more candidate optimization methods are used to optimize the first code segment.

In a possible implementation, after converting the first code segment into the mode layer intermediate representation and the element layer intermediate representation, and determining candidate optimization methods corresponding to the first code segment at the mode layer and the element layer, the analysis module does not need to convert the first code segment into the element layer intermediate representation. The analysis module can generate the hardware layer intermediate representation of the first code segment based on the mode information of the first code segment, and then determine the one or more candidate optimization methods that can be used for the first code segment and that are of the computing mode of the first code segment in the optimization method corresponding to the hardware layer. The one or more candidate optimization methods are used to optimize the first code segment.

In a possible implementation, after the analysis module extracts the mode information of each code segment, the analysis module is further configured to generate, based on the mode information of each code segment, an intermediate representation corresponding to a target compiler.

The code processing apparatus further includes a compilation module, configured to input the intermediate representation corresponding to the target compiler to the target compiler for compilation, to generate an executable file corresponding to the source code.

According to a third aspect, this application provides a computing device, including a processor and a memory. The memory is configured to store instructions, the processor is configured to execute the instructions, and when the processor executes the instructions, the processor performs the code processing method according to any one of the first aspect or the possible implementations of the first aspect.

According to a fourth aspect, this application provides a computer cluster. The computer cluster includes at least one computing device, and each computing device includes a processor and a memory. The processor of the at least one computing device is configured to execute instructions stored in the memory of the at least one computing device, to enable the computing device cluster to perform the code processing method according to any one of the first aspect or the possible implementations of the first aspect.

According to a fifth aspect, this application provides a computer program product. When the computer program product is run on a computing device, the computing device is enabled to perform the code processing method according to any one of the first aspect or the possible implementations of the first aspect.

According to a sixth aspect, this application provides a computer-readable storage medium. The computer-readable storage medium stores instructions. When the instructions are run on a computing device, the computing device is enabled to perform the code processing method according to any one of the first aspect or the possible implementations of the first aspect.

### BRIEF DESCRIPTION OF DRAWINGS

To describe technical solutions in embodiments of this application more clearly, the following briefly describes the accompanying drawings for describing embodiments. It is clear that the accompanying drawings in the following descriptions show merely some embodiments of this application, and a person of ordinary skill in the art may still derive other drawings from these accompanying drawings without creative efforts.
FIG. 1 is a schematic flowchart of a computing mode identification method according to an embodiment of this application;
FIG. 2 is a schematic flowchart of another computing mode identification method according to an embodiment of this application;
FIG. 3 is a schematic flowchart of another code processing method according to an embodiment of this application;
FIG. 4 is a schematic flowchart of a code optimization method according to an embodiment of this application;
FIG. 5 is a schematic diagram of a code processing process according to an embodiment of this application;
FIG. 6 is a schematic diagram of a code processing apparatus according to an embodiment of this application;
FIG. 7 is a schematic diagram of a computing device according to an embodiment of this application; and
FIG. 8 is a schematic diagram of a computing cluster according to an embodiment of this application.

### DESCRIPTION OF EMBODIMENTS

The following describes technical solutions of this application with reference to accompanying drawings.

A computing mode is a general representation manner used to represent one or more solving/computational processes. The computing mode includes the following types: dense linear algebra (Dense Linear Algebra), sparse linear algebra (Sparse Linear Algebra), spectral method (Spectral Method), structured grids (Structured Grids), unstructured grids (Unstructured Grids), N-body method (N-Body Method), combinational logic (Combinational Logic), graph traversal (Graph Traversal), and the like. For example, a commonly used template (Stencil) computing mode belongs to structured grids, and a sparse matrix multiplication computing mode belongs to sparse linear algebra.

Code of an application usually relates to one or more computing modes, and the computing mode is usually a performance hotspot of the application. For example, the stencil computing mode usually represents a plurality of solving/computational processes such as partial differential equation solution, Jacobi (Jacobi) operation, and difference, and relates to many scientific and engineering fields such as fluid mechanics and weather forecast. Improving application performance by optimizing a computing mode in application code is one of effective ways to optimize the code.

Currently, when code of an application is optimized, a performance hotspot of a target application needs to be determined in a sampling manner when the application is running, then the performance hotspot is analyzed, and a code segment that can be optimized in the code is fed back to a user, so that the user manually performs optimization based on optimization experience. Usually, a performance hotspot of code is a code segment corresponding to a computing mode. Therefore, identifying the computing mode of the code is a key step for optimizing the code. However, in the foregoing process of running source code, determining the performance hotspot by using the sampling method introduces time overheads of sampling, and for an application that has long running time, time costs of analysis and optimization are further increased. Therefore, how to improve identification efficiency of a computing mode of code is a technical problem to be urgently resolved.

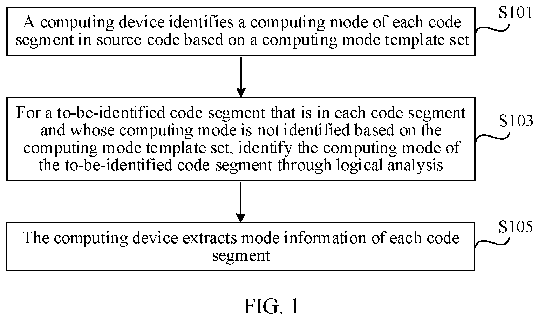

To resolve the foregoing problem, embodiments of this application provide a computing mode identification method, so that a computing mode included in source code can be identified by using the source code of an application program. In other words, in the method, a code segment that includes the computing mode and that is in the source code can be identified without running of the source code. FIG. 1 is a schematic flowchart of a computing mode identification method according to an embodiment of this application. The method includes the following S101 to S105.

S101: A computing device identifies a computing mode of each code segment in source code based on a computing mode template set.

Before identifying, in a template matching manner, the computing mode included in the source code, the computing device first establishes the computing mode template set. The computing mode template set includes templates corresponding to a plurality of computing modes. A template corresponding to each computing mode includes a series of corresponding rules that are written based on a feature of the computing mode, and the computing mode template set can identify the computing mode included in the source code.

When identifying, in the template matching manner, the computing mode included in the source code, the computing device first obtains one code segment in the source code, for example, a first code segment. Then, for the first code segment in the source code, the computing device matches the first code segment with each template in the computing mode template set. When the first code segment meets a rule of a template corresponding to a first computing mode in the computing mode template set, the computing device determines that a computing mode of the first code segment belongs to the first computing mode. When identifying the computing mode of the first code segment in the template matching manner, the computing device extracts mode information of the first code segment, and matches the extracted mode information with mode information of each computing mode, to determine the computing mode of the first code segment. The mode information includes a data flow feature, a computing rule feature, a control flow feature, a storage format feature, a communication operation feature, and the like.

It should be understood that the user can modify data in the computing mode template set, or supplement the computing mode template set. This is not specifically limited in this embodiment of this application.

S103: For a to-be-identified code segment that is in each code segment and whose computing mode is not identified based on the computing mode template set, identify the computing mode of the to-be-identified code segment through logical analysis.

When the computing device identifies computing modes of a plurality of code segments in the source code in the foregoing template matching manner, computing modes of some code segments may not be identified in the template matching manner. If there are one or more to-be-identified code segments that are in the source code and whose computing modes cannot be identified in the template matching manner, the computing device identifies a computing mode of each to-be-identified code segment through the logical analysis.

In this embodiment of this application, the logic analysis is a method for identifying, based on an analysis or induction idea, a computing mode of a code segment by using a program synthesis technology. In the method, based on the analysis or induction idea, a template that meets a feature of the first computing mode is generated for an input first to-be-identified code segment by using the program synthesis technology. Then, a solution space of a to-be-determined parameter oriented to the template is constructed for the template, and a candidate solution of the to-be-determined parameter is searched within a range of the solution space, to determine whether the candidate solution can express semantics of the first computing mode. For example, Hoare logic is used to verify whether the candidate solution can correctly express the semantics of the first computing mode. After determining that the candidate solution can correctly express the semantics of the first computing mode, the computing device determines that the first computing mode is a computing mode of the first to-be-identified code segment. The first to-be-identified code segment is any one of the foregoing to-be-identified code segments. The first computing mode is a prediction mode of the first to-be-identified code, and the prediction mode is obtained in the foregoing template matching process. When the computing device identifies the computing mode of each code segment based on the computing mode template set, and cannot determine a computing mode of one code segment, the computing device can predict the computing mode of the code segment.

S105: The computing device extracts mode information of each code segment.

After identifying the computing modes of the plurality of code segments in the source code, the computing device extracts, by using a technology such as semantic analysis, data flow analysis, or abstract syntax tree (abstract syntax tree, AST) analysis, mode information related to the computing modes of the plurality of code segments whose computing modes are identified. The mode information related to the computing modes includes the data flow feature, the computing rule feature, the control flow feature, the storage format feature, the communication operation feature, and the like.

According to the foregoing computing mode identification method, the computing modes of the plurality of code segments in the source code can be identified without running of the source code. This avoids time overheads caused by running the source code, and improves identification efficiency of the computing mode of the code. When identifying the computing modes of the plurality of code segments in the source code, the computing device first performs identification in a template matching manner with high identification efficiency, to improve efficiency of computing mode identification. However, for a code segment whose computing mode cannot be identified through template matching, the computing device performs identification by using a logical analysis method with high identification accuracy, to increase a quantity of code segments whose computing modes can be identified. This facilitates subsequent processing of the source code. For example, this can be used to optimize the source code. In the foregoing method, a code segment corresponding to a computing mode that is usually an application hotspot can be identified by using the source code, and the code does not need to be optimized in a compilation process. This can improve code debugging or optimization efficiency. In addition, a larger quantity of code that is in the source code and whose computing mode is identified indicates a larger quantity of code that can be optimized in the source code, and indicates a better effect of optimizing the source code.

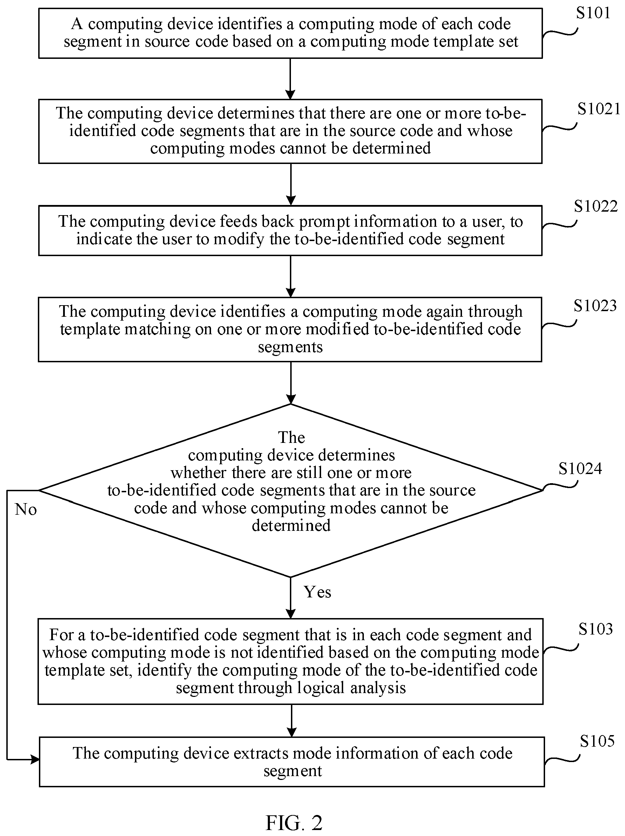

In a possible implementation, as shown in FIG. 2, in S101, if the computing device determines that there are one or more to-be-identified code segments that are in the source code and whose computing mode cannot be determined through template matching, the computing device may first perform the following S1021 to S1024 before performing S103.

S1021: The computing device determines that there are one or more to-be-identified code segments that are in the source code and whose computing modes cannot be determined.

When the computing device identifies the computing modes of the plurality of code segments in the source code in the template matching manner, computing modes of some code segments may not be identified in the template matching manner. If there are one or more to-be-identified code segments that are in the source code and whose computing mode cannot be identified in the template matching manner, S1022 is performed. If computing modes of all code segments in the source code are identified in the template matching method, S105 is performed.

S1022: The computing device feeds back prompt information to the user, to indicate the user to modify the to-be-identified code segment.

When the computing modes of the plurality of code segments in the source code are identified by using the template matching method, mode information extracted by the computing device from one code segment is insufficient. As a result, the computing device cannot match the mode information of the code segment with mode information of any computing mode, and cannot identify a computing mode of the code segment. For example, the computing device can identify one computing mode by extracting four types of mode information, but only less than four types of mode information can be extracted from some code segments in the source code. Therefore, when the computing modes of the plurality of code segments in the source code are identified by using the template matching method, there may be one or more to-be-identified code segments whose computing modes cannot be identified by using the template matching method.

After the computing device determines that there are one or more to-be-identified code segments whose computing modes cannot be identified through template matching, the computing device can feed back the prompt information to the user, and output each to-be-identified code segment whose computing mode is not identified. The prompt information indicates the user to modify the one or more to-be-identified code segments, so that the computing device can obtain more mode information from the to-be-identified code segment whose computing mode is not identified for template matching, and identify the computing modes of the one or more to-be-identified code segments. For example, more mode information is marked for each to-be-identified code segment or the to-be-identified code segment is modified, so that the computing device can obtain more mode information from each to-be-identified code segment.

S1023: The computing device identifies the computing mode again through template matching on the one or more modified to-be-identified code segments.

After the user modifies the one or more to-be-identified code segments whose computing modes cannot be identified through template matching, the computing device obtains each modified to-be-identified code segment, performs matching on each modified to-be-identified code segment by using the template matching method again, and identifies a computing mode of each modified to-be-identified code segment.

It should be understood that, after mode matching is performed on each modified to-be-identified code segment to identify the computing mode of each code segment in S1023, if there is still a code segment whose computing mode cannot be identified in the modified to-be-identified code segment, S1022 and S1023 may continue to be performed. A quantity of times of performing S1022 and S1023 may be set by the user. Alternatively, when the computing device determines that a proportion of the code segments whose computing modes cannot be identified in the source code is less than a first proportion threshold or that a quantity of code segments whose computing modes cannot be identified is less than a first quantity threshold, the foregoing template matching process is stopped. This is not specifically limited in this embodiment of this application.

S1024: The computing device determines whether there are still one or more to-be-identified code segments that are in the source code and whose computing modes cannot be determined; and performs S103 if there are still one or more to-be-identified code segments whose computing modes cannot be determined, or performs S105 if there is no code segment whose computing modes cannot be determined.

According to the foregoing computing mode identification method, the computing modes of the plurality of code segments in the source code can be identified without running of the source code. This avoids time overheads caused by running the source code, and improves identification efficiency of the computing mode.

When a computing mode of one code segment is not identified based on the computing mode template set, a possible cause is that the code segment has a small quantity of features that can match a template in the computing mode template set. As a result, the computing device cannot determine a computing mode of the code segment. In this case, the computing device can output the prompt information to prompt the user that the code segment cannot be identified in the template matching manner, and the user can modify the code segment, so that the computing device can extract more features of the code segment to perform template matching again. Through a plurality of times of template matching, the computing device can identify as many computing modes included in the source code as possible.

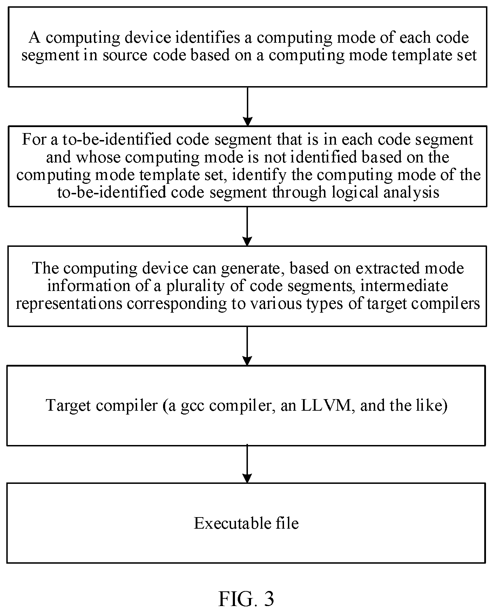

In a possible implementation, FIG. 3 is a schematic flowchart of a code processing method according to an embodiment of this application. After a computing device identifies, according to any method shown in FIG. 1 or FIG. 2, a computing mode of source code and extracts mode information of a plurality of code segments about the computing mode, the computing device can generate, based on the extracted mode information of the plurality of code segments, intermediate representations (intermediate representation, IR) corresponding to various types of target compilers. Then, the computing device inputs the generated intermediate representations into the corresponding target compilers, to complete compiler optimization and generate an optimized executable file. The target compiler includes a gcc compiler, an LLVM compiler, a WebStorm compiler, an Ideone compiler, a Codechef compiler, and the like.

It should be understood that the computing device can implement, by using a software module, any method shown in FIG. 1 or FIG. 2. The software module can be used as a component in a compiler. Before compiling source code that needs to be compiled, the compiler identifies, by using the component, computing modes of a plurality of code segments in the source code, extracts mode information about the computing modes, and then generates, based on the mode information, an intermediate representation corresponding to the compiler. The compiler completes the compiler optimization by using the intermediate representation and generates an executable file.

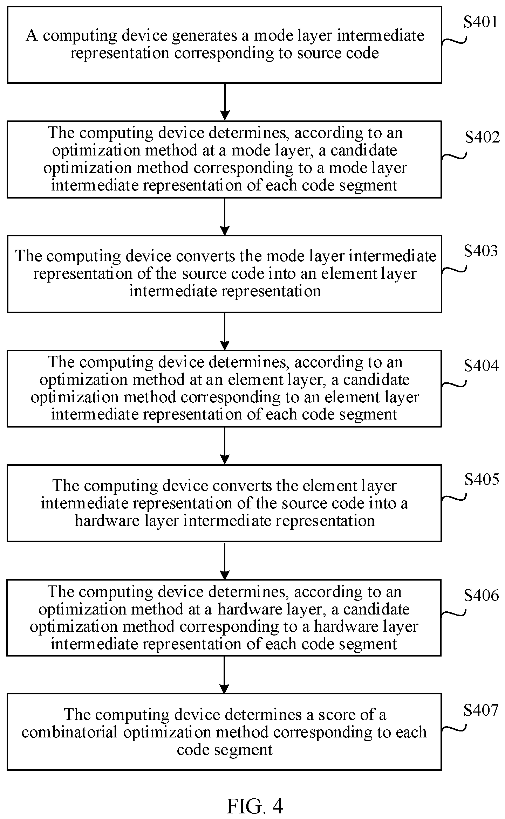

Embodiments of this application further provide a code optimization method. In the method, an optimization method for optimizing source code can be determined based on mode information extracted after a computing mode is identified according to any method shown in FIG. 1 or FIG. 2. FIG. 4 is a schematic flowchart of a code optimization method according to an embodiment of this application. After performing any method shown in FIG. 1 or FIG. 2 to obtain computing modes of a plurality of code segments in source code, and extract mode information of the plurality of code segments, a computing device performs the following S401 to S407.

S401: The computing device generates a mode layer intermediate representation corresponding to the source code.

The mode layer intermediate representation is an abstract representation designed for a computing mode. The mode layer intermediate representation can completely describe one computing mode, and indicate mode information such as a data flow, a computing rule, a control flow, a storage format, and a communication operation of code. After extracting mode information of a code segment whose computing mode has been identified, the computing device generates the mode layer intermediate representation based on the mode information.

S402: The computing device determines, according to an optimization method at a mode layer, a candidate optimization method corresponding to a mode layer intermediate representation of each code segment.

In this embodiment of this application, the corresponding optimization method is set at the mode layer. To be specific, after each code segment whose computing mode is identified is converted into the mode layer intermediate representation, mode layer intermediate representations of different computing modes correspond to one or more optimization methods. The optimization method at the mode layer includes optimization methods corresponding to mode layer intermediate representations of various computing modes, including heterogeneous scheduling, segmentation, algorithm conversion, and the like. This is not specifically limited in this embodiment of this application.

After the mode layer intermediate representation corresponding to the source code is generated, an optimization method corresponding to the mode layer intermediate representation of each code segment is determined according to the optimization methods corresponding to the mode layer intermediate representations of the different computing modes and based on the computing mode of each code segment whose computing mode is identified. Next, whether the optimization method corresponding to the mode layer intermediate representation of each code segment is available is determined, and an available optimization method corresponding to each code segment is determined. Then, whether code performance can be improved is determined after code is optimized by using the available optimization method corresponding to each code segment. If one optimization method corresponding to one code segment can be used to optimize the code segment, and performance of the code segment can be improved after the code segment is optimized by using the optimization method, the optimization method is used as a candidate optimization method corresponding to a mode layer intermediate representation of the code segment.

For example, any code segment in the source code, for example, a first code segment, is used as an example. If the first code segment belongs to a three-layer loop, a computing mode of the first code segment of the three-layer loop is a stencil computing mode, and there are 10 optimization methods corresponding to a mode layer intermediate representation of the first code segment. However, only six of the 10 optimization methods are applicable to the three-level loop, and other optimization methods are not applicable to the three-layer loop. In this case, the first code segment has six available optimization methods in total. The computing device further determines whether performance of the first code segment can be improved after the six optimization methods are separately used. When determining that the performance of the first code segment can be improved after the first code segment is optimized by using only five of the foregoing six optimization methods, the computing device uses the five optimization methods as candidate optimization methods corresponding to the mode layer intermediate representation of the first code segment.

S403: The computing device converts the mode layer intermediate representation of the source code into an element layer intermediate representation.

The element layer intermediate representation is compatible with, but is not limited to, an existing expression capability of a current multi-level intermediate representation (multi-level intermediate representation, MLIR), and can support one or more of a matrix, a scalar, a control flow, and an affine change. After generating the mode layer intermediate representation corresponding to the source code, and determining the candidate optimization method for the mode layer intermediate representation of each code segment whose computing mode is identified, the computing device converts the mode layer intermediate representation into the element layer intermediate representation.

S404: The computing device determines, according to an optimization method at an element layer, a candidate optimization method corresponding to an element layer intermediate representation of each code segment.

In this embodiment of this application, the corresponding optimization method is set at the element layer. To be specific, after each code segment whose computing mode is identified is converted into the element layer intermediate representation, element layer intermediate representations of different computing modes correspond to one or more optimization methods. The optimization method at the element layer includes optimization methods corresponding to element layer intermediate representations of various computing modes, including tiling (tiling), a data structure, data rearrangement, and the like.

After the element layer intermediate representation corresponding to the source code is generated, an optimization method corresponding to the element layer intermediate representation of each code segment is determined according to the optimization methods corresponding to the element layer intermediate representations of the different computing modes and based on the computing mode of each code segment. Next, whether the optimization method corresponding to the element layer intermediate representation of each code segment is available is determined, and an available optimization method corresponding to each code segment is determined. Then, whether the code performance can be improved is determined after the code is optimized by using the available optimization method corresponding to each code segment. If one optimization method corresponding to one code segment can be used to optimize the code segment, and performance of the code segment can be improved after the code segment is optimized by using the optimization method, the optimization method is used as a candidate optimization method corresponding to an element layer intermediate representation of the code segment.

For example, if there are eight optimization methods corresponding to an element layer intermediate representation of the first code segment, but only five of the eight optimization methods are applicable to the first code segment, and other optimization methods are not applicable, the first code segment has five optimization methods in total at the element layer. The computing device further determines whether the performance of the first code segment can be improved after the five optimization methods are separately used. When determining that the performance of the first code segment can be improved after the first code segment is optimized by using only three of the foregoing five optimization methods, the computing device uses the three optimization methods as candidate optimization methods corresponding to the element layer intermediate representation of the first code segment.

S405: The computing device converts the element layer intermediate representation of the source code into a hardware layer intermediate representation.

The hardware layer intermediate representation is compatible with a high-performance data structure, computing, memory access, a communication operation, and the like used in an abstract system, hardware, and the like. After generating the element layer intermediate representation corresponding to the source code, and determining the candidate optimization method for the element layer intermediate representation of each code segment, the computing device converts the element layer intermediate representation corresponding to the source code into the hardware layer intermediate representation.

S406: The computing device determines, according to an optimization method at a hardware layer, a candidate optimization method corresponding to a hardware layer intermediate representation of each code segment.

In this embodiment of this application, the corresponding optimization method is set at the hardware layer. To be specific, after each code segment whose computing mode is identified is converted into the hardware layer intermediate representation, hardware layer intermediate representations of different computing modes correspond to one or more optimization methods. The optimization method at the hardware layer includes optimization methods corresponding to hardware layer intermediate representations of various computing modes.

After the hardware layer intermediate representation corresponding to the source code is generated, an optimization method corresponding to the hardware layer intermediate representation of each code segment is determined according to the optimization methods corresponding to the hardware layer intermediate representations of the different computing modes and based on the computing mode of each code segment. Next, whether the optimization method corresponding to the hardware layer intermediate representation of each code segment is available is determined, and an available optimization method corresponding to each code segment is determined. Then, whether the code performance can be improved is determined after the code is optimized by using the available optimization method corresponding to each code segment. If one optimization method corresponding to one code segment can be used to optimize the code segment, and performance of the code segment can be improved after the code segment is optimized by using the optimization method, the optimization method is used as a candidate optimization method corresponding to a hardware layer intermediate representation of the code segment.

For example, if there are seven optimization methods corresponding to a hardware layer intermediate representation of the first code segment, but only six of the seven optimization methods are applicable to the first code segment, and the other optimization method is not applicable, the first code segment has six optimization methods in total at the hardware layer. The computing device further determines whether the performance of the first code segment can be improved after the six optimization methods are separately used. When determining that the performance of the first code segment can be improved after the first code segment is optimized by using four of the foregoing six optimization methods, the computing device uses the four optimization methods as candidate solutions corresponding to the hardware layer intermediate representation of the first code segment.

S407: The computing device determines a score of a combinatorial optimization method corresponding to each code segment.

After determining a candidate optimization method corresponding to each code segment at each layer (the mode layer, the element layer, and the hardware layer), the computing device obtains a candidate optimization method set. Because an intermediate representation of each code segment at each layer corresponds to one or more candidate optimization methods, one code segment corresponds to a plurality of combinatorial optimization methods. For example, for the first code segment, if there are k1 candidate optimization methods for the mode layer intermediate representation of the first code segment, there are k2 optimization methods for the corresponding element layer intermediate representation, and there are k3 optimization methods for the corresponding hardware layer intermediate representation, the first code segment includes k corresponding combinatorial optimization methods, where k = (k1 + 1) * (k2 + 1) * (k3 + 1). It should be understood that when one code segment has no corresponding optimization method at one layer, the code segment is not optimized at the layer.

For the plurality of combinatorial optimization methods corresponding to each code segment, the computing device determines performance improvement of each combinatorial optimization method, and provides a score of each combinatorial optimization method. A higher score of a combinatorial optimization method indicates a higher improvement in code performance after the code segment is optimized by using the combinatorial optimization method.

In a possible implementation, after the computing device determines a score of each combinatorial optimization method, the computing device may select a combinatorial optimization method having a highest score as a target combinatorial optimization method, optimize the source code by using a template combinatorial optimization method, and generate target code or an executable file obtained through optimizing the source code.

A plurality of intermediate representations corresponding to the source code are designed, so that key information and a feature of a computing mode and key information and features of different hardware can be accurately expressed, the computing device can determine more optimization opportunities to further optimize the source code, the source code is optimized more thoroughly, and performance of optimized code is better improved.

In a possible implementation, the computing device converts the source code into a mode layer intermediate representation, an element layer intermediate representation, and a hardware layer intermediate representation, and determines a candidate optimization method corresponding to each code segment at each layer. In an actual implementation, the computing device may convert the source code into only an intermediate representation at any layer, determine a candidate optimization method corresponding to an intermediate representation of each code segment at the layer, and score the candidate optimization method corresponding to the intermediate representation at the layer. The computing device may further convert the source code into intermediate representations at any two of the foregoing layers, and determine a candidate optimization method corresponding to an intermediate representation of each code segment at each layer. For example, the source code is first converted into a mode layer intermediate representation, and a candidate optimization method corresponding to a mode layer intermediate representation of each code segment is determined. Then, the mode layer intermediate representation is converted into a hardware layer intermediate representation, and a candidate optimization method corresponding to a hardware layer intermediate representation of each code segment is determined. Finally, a score corresponding to a combinatorial optimization method corresponding to each code segment is determined.

It should be understood that, in this embodiment of this application, a user can select or preset, based on a requirement, a layer or a plurality of layers of intermediate representations into which the source code is to be converted. The computing device converts the source code into a corresponding intermediate representation based on a selection or setting of the user, to determine a candidate optimization solution corresponding to an intermediate representation of each code segment at each layer, and further determine a score of a combinatorial optimization method corresponding to each code segment. This is not specifically limited in this embodiment of this application.

In a possible implementation, in S402, S404, and S406, if an intermediate representation of one code segment (for example, the first code segment) at one layer (for example, the mode layer) corresponds to one or more candidate optimization methods, the computing device may optimize the first code segment by using the one or more optimization methods, to obtain one or more fourth code segments obtained through optimizing the first code segment. Some or all of the one or more fourth code segments may correspond to an optimization method, in this case, the computing device can continue to optimize a fourth code segment that can be optimized, to obtain one or more optimized fifth code segments. Each optimized fourth code segment corresponds to a fifth code segment. Similarly, there may be a code segment corresponding to an optimization method in the fifth code segment, in this case, the computing device can continue to optimize the fifth code segment. The rest may be deduced by analogy until an optimized code segment cannot be optimized again.

For example, there are six optimization methods corresponding to a mode layer intermediate representation of a first code segment C. After the first code segment is optimized by using the six optimization methods, six optimized code segments C1 to C6 are obtained. If three code segments in C1 to C6 correspond to different optimization methods, for example, the first code segment C is a segment of code of the stencil computing mode of the three-layer loop, and the stencil computing mode corresponds to 10 optimization methods, but only six optimization methods are applicable to the three-layer loop, in this case, after the first code segment is optimized by using the six optimization methods, six optimized codes C1 to C6 in total are obtained. The six code segments include three code segments of a two-layer loop, namely, C1 to C3. Of the 10 optimization methods corresponding to the stencil computing mode, two optimization methods are applicable to code of the two-layer loop. In this case, the computing device separately optimizes the foregoing three code segments of the two-layer loop by using the two optimization methods, to obtain six optimized code segments corresponding to C1 to C3, namely, C11, C12, C21, C22, C31, and C32. If no other optimization method can continue to optimize the optimized code segment after optimization is performed on the three code segments of the two-layer loop, the first code segment C has 13 equivalent code segments, namely, C, C1 to C6, C11, C12, C21, C22, C31, and C32. It is equivalent to that there are 12 candidate optimization methods corresponding to the mode layer intermediate representation of the first code segment.

It should be understood that, if there are 12 candidate optimization methods corresponding to the mode layer intermediate representation of the first code segment, in other words, after the first code segment is optimized by using an optimization method at the mode layer, there are 13 corresponding equivalent code segments, when the 13 equivalent code segments are optimized at the element layer, each equivalent code segment should be used as a new code segment. However, optimization of the 13 equivalent code segments should be considered as optimization of the first code segment. In other words, a final combinatorial optimization solution corresponding to the 13 code segments should be used as a combinatorial optimization solution corresponding to the first code segment.

After the 12 candidate optimization methods corresponding to the mode layer intermediate representation of the first code segment are determined, and when the mode layer intermediate representation is converted into the element layer intermediate representation, the 13 equivalent code segments corresponding to the first code segment C need to be converted. The 13 code segments are respectively converted into 13 element layer intermediate representations, and optimization methods that correspond to the element layer intermediate representations corresponding to the 13 code segments are determined. For an optimization solution corresponding to each equivalent code segment, optimization is performed by using a corresponding optimization method until the optimized code segment does not have a corresponding optimization method, and a candidate optimization method of each equivalent code segment of the first code segment at the element layer is determined. When the foregoing element layer intermediate representation is converted into the hardware layer intermediate representation, code segments obtained after optimization at the element layer also need to be converted into the hardware layer intermediate representations, an optimization method that corresponds to a hardware layer intermediate representation corresponding to each code segment is determined, and each code segment is optimized by using a corresponding optimization method, until the optimized code segment has no corresponding optimization method.

It should be understood that, the user can set, based on a requirement, a condition for stopping optimization on a code segment, and there is no limitation that automatic optimization at each layer is stopped only when there is no available optimization method for a current intermediate representation. For example, the user can set a same code segment to be optimized only twice at a same layer (the mode layer, the element layer, or the hardware layer). In other words, after the code segment is optimized and after an equivalent code segment obtained through optimizing the code segment is optimized, even if there is an optimization method that can optimize the equivalent code segment obtained through optimizing the code segment, the computing device does not continue to perform optimization. For example, there are six available optimization methods for the mode layer intermediate representation of the first code segment. After the first code segment can be optimized by using the six optimization methods, six optimized equivalent code segments can be obtained. If four equivalent code segments of the six equivalent code segments correspond to optimization methods, and each equivalent code segment corresponds to two optimization methods, after the four equivalent code segments are optimized by using code optimization methods corresponding to the four equivalent code segments, eight optimized code segments can be obtained. If there is still an available optimization method corresponding to code in the eight optimized code segments, the computing device no longer further optimizes the code by using the corresponding optimization method.

In a possible implementation, the computing device may further determine, based on a condition set by the user, which optimization methods are to be used, or may determine, based on a condition set by the user, the condition for stopping optimization on the code segment. After the computing device determines an available optimization method of one code segment and determines an optimization method that can improve performance of the code segment, if one optimization method can improve performance of an optimized code segment, and the performance improvement is greater than or equal to a preset threshold, the computing device uses the optimization method as a candidate optimization method corresponding to an intermediate representation of the code segment. For example, running duration of optimized code is less than running duration before optimization, and a proportion of reduced running duration to the running duration before the optimization is greater than or equal to a preset threshold. For example, there are six available optimization methods for the mode layer intermediate representation of the first code segment. Of the six available optimization methods, performance of a code segment obtained through optimization can be improved only after the first code segment is optimized by using five optimization methods. However, of the five optimization methods, a performance improvement of code is greater than or equal to a preset threshold only after the code is optimized by using three optimization methods. In this case, there are three candidate optimization methods for the mode layer intermediate representation of the first code segment of the computing device, and the other three available optimization methods cannot meet a performance requirement after optimization, and therefore cannot be used as candidate optimization solutions.

In a possible implementation, the user can input an optimization policy based on an actual requirement, and the computing device scores, according to the optimization policy of the user, different combinatorial optimization methods corresponding to a same code segment. The optimization policy includes running speed first, computing resource utilization first, memory utilization first, and the like. For example, when the user selects a running speed first optimization policy, for one code segment, after the computing device obtains a plurality of combinatorial optimization methods corresponding to the code segment, a higher running speed of the code segment after the code segment is optimized by using one combinatorial optimization method indicates a higher score of the combinatorial optimization method.

In a possible implementation, one code segment may have no applicable optimization method. In other words, the code segment has no applicable optimization method at the mode layer, the element layer, and the hardware layer. After determining that one code segment does not have an applicable optimization method, the computing device obtains, from a high-performance computing mode implementation library, implemented code that is closest to a computing mode of the code segment, and feeds back the implemented code to the user for reference, to optimize the code segment.

It should be understood that the user can modify or supplement optimization methods corresponding to various computing modes at the foregoing layers. This is not specifically limited in this embodiment of this application.

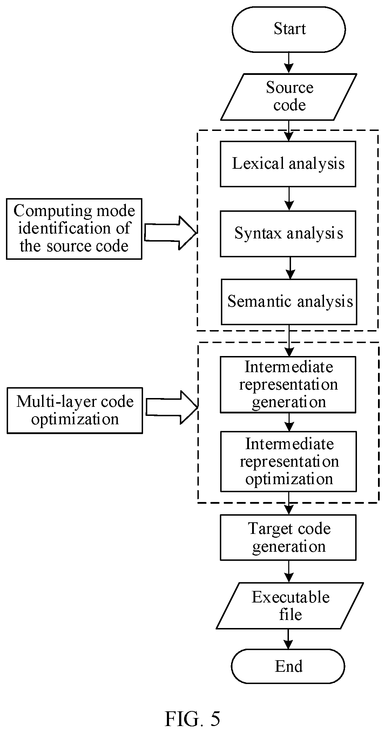

In a possible implementation, FIG. 5 is a schematic diagram of a code processing process according to an embodiment of this application. The computing mode identification method for the source code according to any method embodiment in FIG. 1 or FIG. 2 can be implemented before lexical analysis, syntax analysis, and semantic analysis are performed, or may be performed at any stage of lexical analysis, syntax analysis, or semantic analysis performed by a compiler, and then code optimization based on a computing mode is performed. This is not specifically limited in this embodiment of this application.

The multi-layer code optimization method shown in FIG. 4 may be implemented in any stage of mode layer intermediate representation generation, element layer intermediate representation generation, and hardware layer intermediate representation generation. This is not specifically limited in this embodiment of this application. After completing optimization of an intermediate representation at each layer, the computing device obtains optimized code or an optimized intermediate representation, and then performs compilation based on the optimized code or the optimized intermediate representation to obtain an executable file.

For brief description, the foregoing method embodiments are all described as a combination of a series of actions. However, a person skilled in the art should understand that the present invention is not limited to the described action sequence. In addition, a person skilled in the art should also understand that all embodiments described in this specification are preferred embodiments, and the related actions are not necessarily mandatory to the present invention.

Another appropriate step combination that a person skilled in the art can think of based on the content described above also falls within the protection scope of the present invention. In addition, a person skilled in the art should also understand that all embodiments described in this specification are preferred embodiments, and the related actions are not necessarily mandatory to the present invention.

The foregoing describes in detail the code processing method provided in this application with reference to FIG. 1 to FIG. 5. The following describes an apparatus and a related device provided in this application with reference to the accompanying drawings.

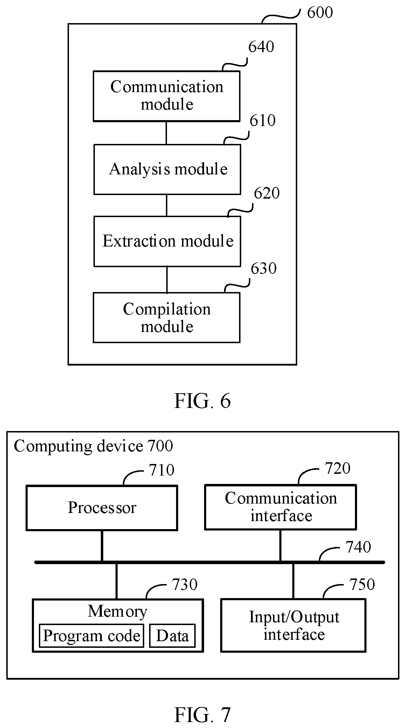

FIG. 6 is a schematic diagram of a code processing apparatus according to an embodiment of this application. The code processing apparatus 600 includes an analysis module 610 and an extraction module 620. The analysis module 610 is configured to: after source code of an application is obtained, identify a computing mode of each code segment in the source code based on a computing mode template set. For a to-be-identified code segment that is in each code segment and whose computing mode cannot be identified based on the computing mode template set, the analysis module 610 then identifies a computing mode of the to-be-identified code segment through logical analysis. The extraction module 620 is configured to extract mode information of each code segment based on a computing mode of each code segment identified by the analysis module 610. The extracted mode information includes any one or more of a data flow feature, a computing rule feature, a control flow feature, a storage format feature, or a communication operation feature.

In a possible implementation, the foregoing analysis module 610 is further configured to: when no computing mode of some code segments is identified by using the computing mode template set, output prompt information, where the prompt information indicates a user to modify a first to-be-identified code segment, and the first to-be-identified code segment is any one of the foregoing to-be-identified code segments; obtain a first to-be-identified code segment modified by the user, and identify, based on the computing mode template set, a computing mode of the first to-be-identified code segment modified by the user; and when the computing mode of the first to-be-identified code segment is not identified based on the computing mode template set, identify the computing mode of the first to-be-identified code segment through logical analysis.

In a possible implementation, when the analysis module 610 identifies the computing mode of the to-be-identified code segment through logical analysis, the analysis module 610 first generates, for the first to-be-identified code segment in the foregoing to-be-identified code segment, a template that meets a feature of a first computing mode. The first computing mode is a prediction mode of the first to-be-identified code segment. Then, the analysis module 610 constructs, for the foregoing template, a solution space for a to-be-determined parameter of the template, and determines a candidate solution of the to-be-determined parameter within a range of the solution space. When the candidate solution can express semantics of the first computing mode, the analysis module 610 determines that the first computing mode is the computing mode of the foregoing first to-be-identified code segment.

In a possible implementation, before the foregoing analysis module 610 identifies the computing mode of the to-be-identified code segment through logical analysis, the analysis module is further configured to determine the prediction mode of the foregoing first to-be-identified code segment based on the computing mode template set.

In this embodiment of this application, for a method for the analysis module 610 to identify the computing mode of each code segment in the source code, refer to the method described in the embodiment corresponding to FIG. 1 or FIG. 2. Details are not described herein again.

In a possible implementation, after identifying the computing mode of each code segment and extracting the mode information of each code segment, the foregoing analysis module 610 can further determine, based on the mode information of each code segment, an optimization method for optimizing the source code. For a method for the analysis module 610 to optimize the source code based on the mode information of each code segment, refer to related descriptions in the embodiment corresponding to FIG. 4. Details are not described herein again.

In a possible implementation, the foregoing code processing apparatus 600 further includes a compilation module 630. After the analysis module 610 extracts the mode information of each code segment, the analysis module 610 can generate, based on the mode information of each code segment, an intermediate representation corresponding to a target compiler. The compilation module 630 is configured to input the intermediate representation corresponding to the target compiler to the target compiler for compilation, to generate an executable file corresponding to the source code.

It should be understood that the foregoing module division of the code processing apparatus 600 is merely an example, and cannot be understood as a specific limitation. For example, that the analysis module 610 identifies a computing mode and that the analysis module 610 determines the optimization method for optimizing the source code may be implemented by using different modules. This is not specifically limited in this embodiment of this application.

In a possible implementation, the foregoing code processing apparatus 600 further includes a communication module 640. The communication module 640 is configured to: receive source code of an application uploaded by the user, output the foregoing prompt information, obtain a to-be-identified code segment modified by the user, and the like.

In this embodiment of this application, all modules of the code processing apparatus 600 may be implemented by using software. For example, the following uses the analysis module 610 as an example to describe an implementation of the analysis module 610.

As an example of a software functional module, the analysis module 610 may include code that is run on a compute instance. The compute instance may include at least one of a physical host (the computing device), a virtual machine, and a container. Further, there may be one or more compute instances. For example, the analysis module 610 may include code that is run on a plurality of hosts/virtual machines/containers. It should be noted that a plurality of hosts/virtual machines/containers used to run the code may be distributed in a same region (region), or may be distributed in different regions. Further, the plurality of hosts/virtual machines/containers used to run the code may be distributed in a same availability zone (availability zone, AZ), or may be distributed in different AZs. Each AZ includes one data center or a plurality of data centers that are geographically close. Usually, one region may include a plurality of AZs.

Similarly, the plurality of hosts/virtual machines/containers used to run the code may be distributed in a same virtual private cloud (virtual private cloud, VPC), or may be distributed in a plurality of VPCs. Usually, one VPC is set in one region. A communication gateway needs to be set in each VPC for communication between two VPCs in the same region and cross-region communication between VPCs in different regions, to implement interconnection between the VPCs through the communication gateway.

FIG. 7 is a schematic diagram of a computing device according to an embodiment of this application. The computing device 700 includes one or more processors 710, a communication interface 720, and a memory 730. The processor 710, the communication interface 720, and the memory 730 are connected to each other through a bus 740.

For a specific implementation of performing various operations by the processor 710, refer to the specific operations of the code processing methods shown in FIG. 1 to FIG. 4. Details are not described herein again.

The processor 710 may have a plurality of specific implementations. For example, the processor 710 may be a central processing unit (central processing unit, CPU). The processor 710 may alternatively be a single-core processor or a multi-core processor. The processor 710 may be a combination of a CPU and a hardware chip. The foregoing hardware chip may be an application-specific integrated circuit (application-specific integrated circuit, ASIC), a programmable logic device (programmable logic device, PLD), or a combination thereof. The foregoing PLD may be a complex programmable logic device (complex programmable logic device, CPLD), a field-programmable gate array (field-programmable gate array, FPGA), a generic array logic (generic array logic, GAL), or any combination thereof. The processor 710 may alternatively be implemented independently by using a logic device with built-in processing logic, for example, an FPGA or a digital signal processor (digital signal processor, DSP).

The communication interface 720 may be a wired interface or a wireless interface, and is configured to communicate with another module or device. The wired interface may be an Ethernet interface, a local interconnect network (local interconnect network, LIN), or the like. The wireless interface may be a cellular network interface, a wireless local area network interface, or the like. In this embodiment of this application, the communication interface 720 may be specifically configured to receive source code of an application uploaded by a user, a to-be-identified code segment modified by the user, and the like.

The memory 730 may be a nonvolatile memory, for example, a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The memory 730 may alternatively be a volatile memory. The volatile memory may be a random access memory (random access memory, RAM), and is used as an external cache. By way of example, and not limitation, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

The memory 730 may also be configured to store program code and data, so that the processor 710 invokes the program code stored in the memory 730 to perform the code processing method described in the foregoing method embodiments. In addition, the computing device 700 may include more or fewer components than those shown in FIG. 7, or may have different component configuration manners.

The bus 740 may be a peripheral component interconnect express (peripheral component interconnect express, PCIe) bus, an extended industry standard architecture (extended industry standard architecture, EISA) bus, a unified bus (unified bus, Ubus or UB), a compute express link (compute express link, CXL), a cache coherent interconnect for accelerators (cache coherent interconnect for accelerators, CCIX), or the like. The bus 740 may be classified into an address bus, a data bus, a control bus, and the like. In addition to a data bus, the bus 740 may further include a power bus, a control bus, a state signal bus, and the like. However, for clarity of description, only one bold line is used to represent the bus in FIG. 7, but this does not mean that there is only one bus or only one type of bus.

Optionally, the computing device 700 may further include an input/output interface 750. The input/output interface 750 is connected to an input/output device, and is configured to: receive input information, output a perform result, and the like

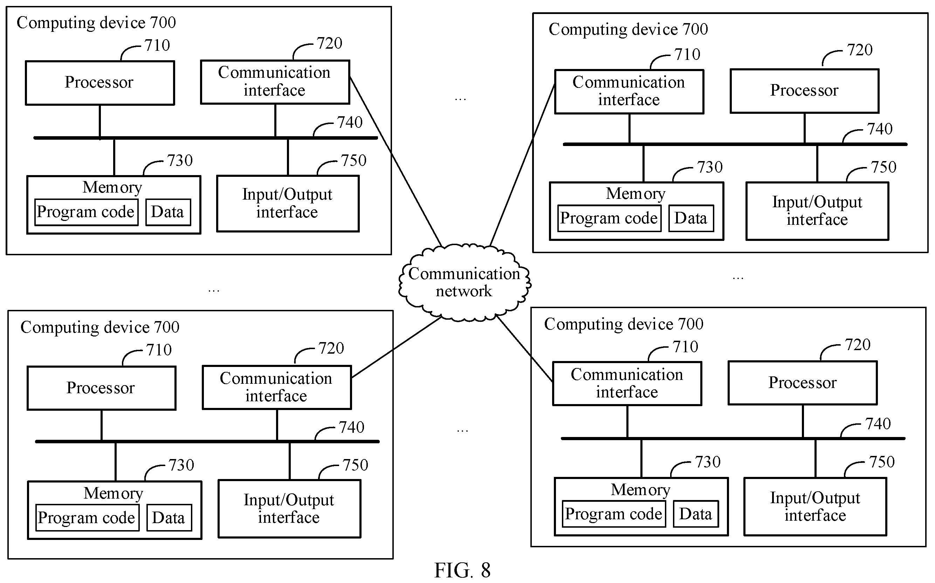

Modules in the code processing apparatus 600 provided in this application may be deployed in a plurality of computing devices 700 in a distributed manner. Therefore, this application further provides a computing device cluster shown in FIG. 8. The computing device cluster includes a plurality of computing devices 700. The plurality of computing devices 700 may be a plurality of computing devices in a same environment, or may be a plurality of computing devices in different environments.

A communication path is established between the foregoing computing devices 700 by using a communication network. Any one or more of the analysis module 610, the extraction module 620, or the compilation module 630 are run on each computing device 700. For example, the analysis module 610 and the extraction module 620 are run in a 1^{st} computing device 700, and the compilation module 630 is run in a 2^{nd} computing device 700. Any computing device 700 may be a computer (for example, a server) in a cloud environment, a computer in an edge data center, a terminal computing device, or the like.

An embodiment of this application further provides a computer-readable storage medium. The computer-readable storage medium stores instructions. When the instructions are run on a processor, the method steps in the foregoing method embodiments can be implemented. For specific implementations of performing the foregoing method steps by the processor of the computer-readable storage medium, refer to specific operations shown in FIG. 1 to FIG. 4 in the foregoing method embodiments. Details are not described herein again.

In the foregoing embodiments, the description of each embodiment has respective focuses. For a part that is not described in detail in an embodiment, refer to related descriptions in other embodiments.

All or some of the foregoing embodiments may be implemented by using software, hardware, firmware, or any combination thereof. When the software is used to implement embodiments, the foregoing embodiments may be implemented completely or partially in a form of a computer program product. The computer program product includes one or more computer instructions. When the computer program instructions are loaded or executed on a computer, all or some of the procedures or functions according to embodiments of the present invention are generated. The computer may be a general-purpose computer, a dedicated computer, a computer network, or other programmable apparatuses. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk drive, or a magnetic tape), an optical medium, or a semiconductor medium. The semiconductor medium may be a solid-state drive.

Steps in the methods in embodiments of this application may be sequentially scheduled, combined, or deleted according to an actual requirement. Modules in the system in embodiments of this application may be divided, combined, or deleted according to an actual requirement.

Embodiments of this application are described in detail above. The principle and implementation of this application are described herein through specific examples. The description about the embodiments of this application is merely provided to help understand the method and core ideas of this application. In addition, a person of ordinary skill in the art may make modifications to the specific implementations and the application scope according to the idea of this application. Therefore, the content of specification shall not be construed as a limit to this application.

## Claims

1. A code processing method, comprising:
identifying a computing mode of each code segment in source code based on a computing mode template set, wherein the computing mode template set comprises a series of rules that correspond to each computing mode and that are written based on each computing mode;
for a to-be-identified code segment that is in each code segment and whose computing mode is not identified based on the computing mode template set, identifying the computing mode of the to-be-identified code segment through logical analysis; and
extracting mode information of each code segment, wherein the mode information comprises any one or more of a data flow feature, a computing rule feature, a control flow feature, a storage format feature, or a communication operation feature.

2. The method according to claim 1, wherein before the identifying the computing mode of the to-be-identified code segment through logical analysis, the method further comprises:
outputting prompt information, wherein the prompt information indicates a user to modify a first to-be-identified code segment, and the first to-be-identified code segment is any one of to-be-identified code segments; and
obtaining a first to-be-identified code segment modified by the user, and identifying a computing mode of the modified first to-be-identified code segment based on the computing mode template set; and
the identifying the computing mode of the to-be-identified code segment through logical analysis comprises:
when the computing mode of the first to-be-identified code segment is not identified based on the computing mode template set, identifying the computing mode of the first to-be-identified code segment through the logical analysis.

3. The method according to claim 1 or 2, wherein the identifying the computing mode of the to-be-identified code segment through logical analysis comprises:
generating, for the first to-be-identified code segment, a template that meets a feature of a first computing mode, wherein the first computing mode is a prediction mode of the first to-be-identified code segment, and the first to-be-identified code segment is any one of to-be-identified code segments;
constructing, for the template, a solution space for a to-be-determined parameter of the template;
determining a candidate solution of the to-be-determined parameter within a range of the solution space; and
when the candidate solution can express semantics of the first computing mode, determining that the first computing mode is the computing mode of the first to-be-identified code segment.

4. The method according to claim 3, wherein before the identifying the computing mode of the to-be-identified code segment through logical analysis, the method further comprises: determining the prediction mode of the first to-be-identified code segment based on the computing mode template set.

5. The method according to any one of claims 1 to 4, wherein the method further comprises:
generating a mode layer intermediate representation of a first code segment based on mode information of the first code segment, wherein the mode layer intermediate representation is an intermediate representation designed based on a computing mode, and the first code segment is any code segment in the source code; and
determining one or more first-type candidate optimization methods that can be used for the first code segment and that are of a computing mode of the first code segment in an optimization method corresponding to a mode layer, wherein the one or more first-type candidate optimization methods are used to optimize the first code segment at the mode layer.

6. The method according to claim 5, wherein the method further comprises:
generating an element layer intermediate representation of the first code segment based on the mode layer intermediate representation of the first code segment, wherein the element layer intermediate representation is compatible with a multi-level intermediate representation MLIR, and supports one or more of a matrix, a scalar, a control flow, and an affine change; and
determining one or more second-type candidate optimization methods that can be used for the first code segment and that are of the computing mode of the first code segment in the optimization method corresponding to the mode layer, wherein the one or more second-type candidate optimization methods are used to optimize the first code segment at an element layer.

7. The method according to claim 6, wherein the method further comprises:
generating a hardware layer intermediate representation of the first code segment based on the element layer intermediate representation of the first code segment, wherein the hardware layer intermediate representation is compatible with a high-performance data structure, computing, memory access, and a communication operation used in an abstract system and hardware; and
determining one or more third-type candidate optimization methods that can be used for the first code segment and that are of the computing mode of the first code segment in an optimization method corresponding to a hardware layer, wherein the one or more third-type candidate optimization methods are used to optimize the first code segment at the hardware layer.

8. The method according to claim 7, wherein the method further comprises:
obtaining one or more combinatorial optimization methods according to the one or more first-type candidate optimization methods, the one or more second-type candidate optimization methods, and the one or more third-type candidate optimization methods, wherein each combinatorial optimization method comprises one first-type candidate optimization method, one second-type candidate optimization method, and one third-type candidate optimization method; and
scoring the one or more combinatorial optimization methods, to obtain a score corresponding to each combinatorial optimization method, and determining a combinatorial optimization method having a highest score as a target combinatorial optimization method for optimizing the first code segment.

9. The method according to claim 8, wherein the scoring the one or more combinatorial optimization methods comprises:
scoring the one or more combinatorial optimization methods according to an optimization policy of a user, wherein the optimization policy comprises running speed first, computing resource utilization first, or memory utilization first.

10. The method according to any one of claims 1 to 4, wherein the method further comprises:
generating an element layer intermediate representation of a first code segment based on mode information of the first code segment, wherein the element layer intermediate representation is compatible with a multi-level intermediate representation MLIR, and supports one or more of a matrix, a scalar, a control flow, and an affine change; and
determining one or more candidate optimization methods that can be used for the first code segment and that are of a computing mode of the first code segment in an optimization method corresponding to a mode layer, wherein the one or more candidate optimization methods are used to optimize the first code segment.

11. The method according to any one of claims 1 to 4, wherein the method further comprises:
generating a hardware layer intermediate representation of a first code segment based on mode information of the first code segment, wherein the hardware layer intermediate representation is compatible with a high-performance data structure, computing, memory access, and a communication operation used in an abstract system and hardware; and
determining one or more candidate optimization methods that can be used for the first code segment and that are of a computing mode of the first code segment in an optimization method corresponding to a hardware layer, wherein the one or more candidate optimization methods are used to optimize the first code segment.

12. The method according to any one of claims 1 to 4, wherein the method further comprises:
generating, based on the mode information of each code segment, an intermediate representation corresponding to a target compiler; and
inputting the intermediate representation corresponding to the target compiler to the target compiler for compilation, to generate an executable file corresponding to the source code.

13. A code processing apparatus, comprising:
an analysis module, configured to identify a computing mode of each code segment in source code based on a computing mode template set, wherein the computing mode template set comprises a series of rules that correspond to each computing mode and that are written based on each computing mode, wherein
the analysis module is further configured to: for a to-be-identified code segment that is in each code segment and whose computing mode is not identified based on the computing mode template set, identify the computing mode of the to-be-identified code segment through logical analysis; and
an extraction module, configured to extract mode information of each code segment, wherein the mode information comprises any one or more of a data flow feature, a computing rule feature, a control flow feature, a storage format feature, or a communication operation feature.

14. The apparatus according to claim 13, wherein the analysis module is further configured to:
output prompt information, wherein the prompt information indicates a user to modify a first to-be-identified code segment, and the first to-be-identified code segment is any one of to-be-identified code segments; and
obtain a first to-be-identified code segment modified by the user, and identify, based on the computing mode template set, a computing mode of the first to-be-identified code segment; and
the analysis module is specifically configured to:
when the computing mode of the first to-be-identified code segment is not identified based on the computing mode template set, identify the computing mode of the first to-be-identified code segment through the logical analysis.

15. The apparatus according to claim 13 or 14, wherein the analysis module is specifically configured to:
generate, for the first to-be-identified code segment, a template that meets a feature of a first computing mode, wherein the first computing mode is a prediction mode of the first to-be-identified code segment, and the first to-be-identified code segment is any one of to-be-identified code segments;
construct, for the template, a solution space for a to-be-determined parameter of the template;
determine a candidate solution of the to-be-determined parameter within a range of the solution space; and
when the candidate solution can express semantics of the first computing mode, determine that the first computing mode is the computing mode of the first to-be-identified code segment.

16. The apparatus according to claim 15, wherein the analysis module is further configured to determine the prediction mode of the first to-be-identified code segment based on the computing mode template set.

17. The apparatus according to claims 13 to 16, wherein the analysis module is further configured to:
generate a mode layer intermediate representation of a first code segment based on mode information of the first code segment, wherein the mode layer intermediate representation is an intermediate representation designed based on a computing mode, and the first code segment is any code segment in the source code; and
determine one or more first-type candidate optimization methods that can be used for the first code segment and that are of a computing mode of the first code segment in an optimization method corresponding to a mode layer, wherein the one or more first-type candidate optimization methods are used to optimize the first code segment at the mode layer.

18. The apparatus according to claim 17, wherein the analysis module is further configured to:
generate an element layer intermediate representation of the first code segment based on the mode layer intermediate representation of the first code segment, wherein the element layer intermediate representation is compatible with a multi-level intermediate representation MLIR, and supports one or more of a matrix, a scalar, a control flow, and an affine change; and
determine one or more second-type candidate optimization methods that can be used for the first code segment and that are of the computing mode of the first code segment in the optimization method corresponding to the mode layer, wherein the one or more second-type candidate optimization methods are used to optimize the first code segment at an element layer.

19. The apparatus according to claim 18, wherein the analysis module is further configured to:
generate a hardware layer intermediate representation of the first code segment based on the element layer intermediate representation of the first code segment, wherein the hardware layer intermediate representation is compatible with a high-performance data structure, computing, memory access, and a communication operation used in an abstract system and hardware; and
determine one or more third-type candidate optimization methods that can be used for the first code segment and that are of the computing mode of the first code segment in an optimization method corresponding to a hardware layer, wherein the one or more third-type candidate optimization methods are used to optimize the first code segment at the hardware layer.

20. The apparatus according to claim 19, wherein the analysis module is further configured to:
obtain one or more combinatorial optimization methods according to the one or more first-type candidate optimization methods, the one or more second-type candidate optimization methods, and the one or more third-type candidate optimization methods, wherein each combinatorial optimization method comprises one first-type candidate optimization method, one second-type candidate optimization method, and one third-type candidate optimization method; and
score the one or more combinatorial optimization methods, to obtain a score corresponding to each combinatorial optimization method, and determine a combinatorial optimization method having a highest score as a target combinatorial optimization method for optimizing the first code segment.

21. The apparatus according to claim 20, wherein the analysis module is specifically configured to:
score the one or more combinatorial optimization methods according to an optimization policy of a user, wherein the optimization policy comprises running speed first, computing resource utilization first, or memory utilization first.

22. The apparatus according to any one of claims 13 to 16, wherein the analysis module is further configured to:
generate an element layer intermediate representation of a first code segment based on mode information of the first code segment, wherein the element layer intermediate representation is compatible with a multi-level intermediate representation MLIR, and supports one or more of a matrix, a scalar, a control flow, and an affine change; and
determine one or more candidate optimization methods that can be used for the first code segment and that are of a computing mode of the first code segment in an optimization method corresponding to a mode layer, wherein the one or more candidate optimization methods are used to optimize the first code segment.

23. The apparatus according to any one of claims 13 to 16, wherein the analysis module is further configured to:
generate a hardware layer intermediate representation of a first code segment based on mode information of the first code segment, wherein the hardware layer intermediate representation is compatible with a high-performance data structure, computing, memory access, and a communication operation used in an abstract system and hardware; and
determine one or more candidate optimization methods that can be used for the first code segment and that are of a computing mode of the first code segment in an optimization method corresponding to a hardware layer, wherein the one or more candidate optimization methods are used to optimize the first code segment.

24. The apparatus according to any one of claims 13 to 16, wherein
the analysis module is further configured to generate, based on the mode information of each code segment, an intermediate representation corresponding to a target compiler; and
the apparatus further comprises a compilation module, configured to generate, based on the intermediate representation corresponding to the target compiler, an executable file corresponding to the source code.

25. A computing device, comprising a processor and a memory, wherein the memory is configured to store instructions, the processor is configured to execute the instructions, and when the processor executes the instructions, the processor performs the method according to any one of claims 1 to 12.

26. A computer-readable storage medium, wherein the computer-readable storage medium stores a computer program, and when the computer program is executed by a processor, the processor performs the method according to any one of claims 1 to 12.
